# EUROPÄISCHE PATENTSCHRIFT

(11) **EP 3 430 965 B1**
(45) Veröffentlichungstag und Bekanntmachung des Hinweises auf die Patenterteilung: **05.08.2020**
(21) Anmeldenummer: 18179705.1
(22) Anmeldetag: 26.06.2018
(51) Int. Cl.: A47L 15/42, D06F 39/00, D06F 39/08

(54) **HAUSHALTSMASCHINE ZUM REINIGEN VON HAUSHALTSGEGENSTÄNDEN**
HOUSEHOLD APPLIANCE FOR CLEANING HOUSEHOLD ITEMS
APPAREIL ÉLECTROMÉNAGER DE NETTOYAGE D'OBJETS MÉNAGERS

(30) Priorität: 20.07.2017 DE 102017116403
(43) Veröffentlichungstag der Anmeldung: 23.01.2019
(73) Patentinhaber: Sanhua AWECO Appliance Systems GmbH, 88099 Neukirch (DE)
(72) Erfinder: Lanz, August, 88069 Tettnang (DE); Böttger, Ulrich, 88079 Kressbronn (DE)
(74) Vertreter: Otten, Roth, Dobler & Partner mbB Patentanwälte

(56) Entgegenhaltungen:
- DE-A1- 2 305 678
- DE-A1- 19 506 918
- DE-A1-102012 216 864
- DE-U1- 8 704 810
- FR-A1- 2 642 671
- US-A- 5 199 455

## Beschreibung

Die Erfindung betrifft eine Haushaltsmaschine zum Reinigen von Haushaltsgegenständen, insbesondere einer Geschirrspülmaschine, Waschmaschine oder dergleichen, nach dem Oberbegriff des Anspruchs 1.

### Stand der Technik

Bereits handelsübliche Haushaltsmaschinen, insbesondere Geschirrspülmaschinen, Waschmaschinen oder dergleichen, weisen eine eine Wasserzufuhrleitung umfassende Wasserzufuhreinheit zum Zuführen von Wasser, insbesondere zum Zuführen von Trinkwasser aus dem Trinkwassernetz, auf. Das heißt, dass ein Wasseranschluss der Haushaltsmaschine vorgesehen ist, der üblicherweise mit dem Trinkwassernetz bzw. dem öffentlichen Wassernetz verbunden wird. Dies wird gewöhnlich mit einem Wasserschlauch realisiert, der in die Haushaltsmaschine führt und intern, d.h. im Innern der Haushaltsmaschine bzw. dessen Gehäuse, meist mit einer (inneren) Wasserleitung bzw. Wasserrohren verbunden ist und der Wasserzufluss bzw. die Wasserzuführung mittels eines elektrisch steuerbaren Ventils bzw. Stellgliedes kontrolliert werden kann. Das heißt, dass die Wasserzufuhr insbesondere den Schlauch einschließlich interner Wasserleitung sowie ein sog. Wassereinlaufventil bzw. Stellglied umfasst.

Diese Wasserzufuhr muss aus hygienischen Gründen vom internen Wasserkreislauf bzw. vom Betriebswasser, das verschmutzen kann, und somit von internen Betriebswasserleitungen etc. entkoppelt bzw. getrennt werden. Dies wird üblicherweise mit einer sog. freien Luftstrecke realisiert.

Dementsprechend endet die Wasserzufuhr bzw. die Wasserzufuhrleitung mit einer Wasserauslauföffnung, die über eine vom einströmenden Wasser zu überwindende (freie) Luftstrecke vom internen Leitungssystem bzw. der Wasseraufnahmeöffnung des internen Wasserführungssystem getrennt und somit entkoppelt ist. Diese Entkopplung bzw. Systemtrennung ist u.a. gesetzlich vorgeschrieben.

Wasser, das aus der Wasserauslauföffnung der Wasserzufuhr ausströmt, jedoch die Wasseraufnahmeöffnung des internen Wasserführungssystems nicht trifft bzw. erreicht, d.h. daneben trifft, wird als sog. Schälwasser bezeichnet und intern aufgefangen und im Wesentlichen für andere Anwendungen in der Maschine verwendet, z.B. zur Regeneration eines Ionentauschermaterials eines Enthärters. Hierbei wird durch eine dosierte Wassermenge, insb. mit in einem Wasserauffangbehälter gespeichertem sog. Schälwasser, aus der Regenerierdosiereinheit eine Salzsole aus einem Salzbehälter verdrängt und in den Ionentauscher gebracht.

Anforderungen an Geschirrspüler bzw. Haushaltsmaschinen sind neben der besonders energiesparsamen Betriebsweise, auch die Menge des anfallenden Schälwassers, die z.B. 5% des einströmenden Wassers nicht übersteigen soll/darf.

Vielfach weist die Wasserzufuhr bzw. die Wasserzufuhrleitung mit der Wasserauslauföffnung einen im Wesentlichen vertikal nach unten gerichteten Abschnitt auf, an den sich die (freie) Luftstrecke anschließt. Beim Abschalten des zuströmenden Wassers bzw. beim Absperren des Wasserzuflusses bleibt aufgrund der Eigenschaften des Wassers, insb. der Oberflächenspannung des Wassers, in diesem Abschnitt Wasser stehen, d.h. der Endabschnitt der Wasserzufuhrleitung mit der Wasserauslauföffnung bleibt mit Wasser gefüllt. Dieses Wasser verdunstet jedoch zum Teil im Laufe der Zeit, d.h. Stunden, Tage oder Wochen, so dass bei kalkhaltigem Wasser sich v.a. an der Wasserauslauföffnung Kalkablagerungen anlagern bzw. entstehen.

Diese nachteiligen Ablagerungen lenken den Wasserstrahl bzw. das aus der Wasserauslauföffnung ausströmende Wasser etwas ab, so dass vermehrt Schälwasser entsteht, d.h. vermehrt Wasser am Ende der Luftstrecke nicht in die Wasseraufnahmeöffnung des internen Wasserführungssystem bzw. des internen Leitungssystems einströmt. Hiermit ist auch ein nachteiliger, vermehrter Anfall an nicht-enthärtetem Wasser in der Maschine verbunden, da lediglich das von der Wasseraufnahmeöffnung aufgenommene der Enthärtung zugeführt wird.

Ein Geschirrspüler gemäß dem Oberbegriff des Anspruchs 1 ist z.B. in DE 23 05 678 A1 offenbart.

### Aufgabe und Vorteile der Erfindung

Aufgabe der Erfindung ist es demgegenüber, eine Haushaltsmaschine zum Reinigen von Haushaltsgegenständen vorzuschlagen, die die Nachteile des Stands der Technik wenigstens teilweise beseitigt, insbesondere eine höhere Betriebssicherheit gegenüber Störungen im Wasserfluss aufweist.

Diese Aufgabe wird, ausgehend von einer Vorrichtung der einleitend genannten Art, durch die Merkmale des Anspruchs 1 gelöst. Durch die in den Unteransprüchen genannten Maßnahmen sind vorteilhaften Ausführungen und Weiterbildungen der Erfindung möglich.

Wenigstens die Wasserzufuhrleitung der erfindungsgemäßen Vorrichtung umfasst zumindest eine zweite Öffnung, wobei die zweite Öffnung als Lufteinströmöffnung zum Einströmen von Luft in die Wasserzufuhrleitung ausgebildet ist.

Mit dieser Maßnahme wird erreicht, dass Wasser auch nach dem Absperren bzw. Verschließen der Wasserzufuhrleitung mit dem ersten Stellglied bzw. dem Wassereinlaufventil nicht in der Wasserzufuhrleitung, zumindest nicht im Bereich der als Wasserauslauföffnung ausgebildeten, ersten Öffnung, d.h. unmittelbar vor der ersten Öffnung bzw. der Wasserauslauföffnung, verbleibt. Mit Hilfe der vorteilhaften zweiten Öffnung bzw. Lufteinströmöffnung kann Luft in die Wasserzufuhrleitung einströmen, so dass das Wasser in der Wasserzufuhrleitung bzw. unmittelbar vor der ersten Öffnung bzw. der Wasserauslauföffnung ausströmen kann.

Ohne diese vorteilhafte zweite Öffnung bzw. Lufteinströmöffnung entstand bislang ein gewisser Unterdruck in der Wasserzufuhrleitung hinter der ersten Öffnung, was u.a. auch mit der Oberflächenspannung des Wassers verhinderte, dass dieses Wasser ablaufen kann. Mit der erfindungsgemäßen zweiten Öffnung bzw. Lufteinströmöffnung strömt nunmehr Luft in die Wasserleitung ein, so dass die Gewichtskraft das Wasser aus der Leitung abfließen lässt. Damit wird erreicht, dass kein stehendes Wasser an der ersten Öffnung verbleibt und durch Verdunstung Kalkablagerungen entstehen können und vermehrt Schälwasser anfällt. Dies wird mit der Erfindung wirkungsvoll (bereits am Ansatz) verhindert.

Denkbar ist, dass die als Lufteinströmöffnung ausgebildete, zweite Öffnung innerhalb der als Wasserauslauföffnung ausgebildeten, ersten Öffnung und/oder wenigstens teilweise ummantelt bzw. umgeben von der als Wasserauslauföffnung ausgebildeten, ersten Öffnung ist. So könnte z.B. ein Luftrohr oder dergleichen am Endbereich der Wasserzufuhrleitung bzw. im Bereich der Wasserauslauföffnung enden und in/innerhalb bzw. durch die Wasserzufuhrleitung in Richtung des ersten Stellgliedes ausgerichtet/angeordnet werden. Hiermit kann Luft in vorteilhafter Weise "hinter" die Wasserauslauföffnung geleitet/geführt/transportiert werden, insb. durch den durch die Gewichtskraft des Wassers generierten Unterdruck, so dass das Wasser wiederum in vorteilhafter Weise nach dem Verschließen der Wasserzufuhrleitung durch das erste Stellglied ausläuft. Gegebenenfalls kann dieses Luftrohr bzw. die Luftleitung als (sehr dünnes) Kapillarluftrohr ausgebildet werden, wobei insbesondere das Wasser nur bedingt oder ggf. nicht in dieses einströmt, aufgrund unterschiedlicher Eigenschaften gegenüber den der Luft, z.B. Viskosität etc..

Vorzugsweise ist die erste Öffnung separat/unabhängig zur/von der zweiten Öffnung ausgebildet und/oder ist ein Abstand zwischen der ersten Öffnung und der zweiten Öffnung der Wasserzufuhrleitung vorgesehen und/oder ist die als Lufteinströmöffnung ausgebildete, zweite Öffnung zwischen der als Wasserauslauföffnung ausgebildeten, ersten Öffnung und dem ersten Stellglied angeordnet. Hiermit ist eine vorteilhafte Einströmung von Luft "hinter" der Wasserauslauföffnung realisierbar, so dass das Wasser wiederum in vorteilhafter Weise nach dem Verschließen der Wasserzufuhrleitung durch das erste Stellglied ausläuft/abläuft.

Vorteilhafterweise weist die Wasserzufuhrleitung wenigstens einen die Wasserauslauföffnung umfassenden, sich verjüngenden Düsenabschnitt und/oder eine Wasserdüse auf. Hiermit ist ein vorteilhafter Wasserstrahl generierbar, so dass z.B. kaum Schälwasser entsteht bzw. das einströmende Wasser die zu überwindende (freie) Luftstrecke vom internen Leitungssystem bzw. bis zur Wasseraufnahmeöffnung des internen Wasserführungssystem als vorteilhafter Wasserstrahl überwindet/strömt und zum Großteil die Wasseraufnahmeöffnung trifft und intern als Betriebswasser im Sinn der Erfindung verwendbar ist bzw. weiter strömt.

Auch eine vorteilhafte Variante der Erfindung, bei der die Wasserzufuhrleitung zwischen dem ersten Stellglied und der als Wasserauslauföffnung ausgebildeten, ersten Öffnung wenigstens einen zumindest teilweise in vertikaler Richtung ausgerichteten Leitungsabschnitt aufweist, verbessert die Wasserführung.

Vorzugsweise umfasst der Leitungsabschnitt wenigstens den Düsenabschnitt und/oder die als Lufteinströmöffnung ausgebildete, zweite Öffnung.

In einer besonderen Weiterbildung der Erfindung ist wenigstens ein zweites Stellglied, insbesondere ein Verschlusselement/ Verschlussventil zum Verschließen und/oder Öffnen der als Lufteinströmöffnung ausgebildeten, zweiten Öffnung vorgesehen. Hiermit kann erreicht werden, dass im Normalbetreib bzw. bei geöffnetem ersten Stellglied kein bzw. kaum Wasser durch die Lufteinströmöffnung entweichen kann und zu Wasserverlusten bzw. Schälwasser führt.

Vorzugsweise ist das zweite Stellglied, insbesondere das Verschlusselement/-ventil, als eine um eine Schwenkachse schwenkbare Klappe ausgebildet, insbesondere ist die Schwenkachse der Klappe an einem ersten Endbereich der Klappe angeordnet und/oder die Schwenkachse in vertikaler Richtung betrachtet oben an der Klappe angeordnet und/oder die Schwenkachse zwischen dem ersten Stellglied und der zweiten Öffnung angeordnet. Hiermit kann eine vorteilhaft selbsttätige Betriebsweise des zweiten Stellgliedes bzw. der Klappe einerseits mittels Wasserdruck und/oder andererseits mittels Schwerkraft verwirklicht werden.

Vorzugsweise ist das zweite Stellglied, insbesondere das Verschlusselement/-ventil, und/oder die um die Schwenkachse schwenkbare Klappe zumindest teilweise an einer Innenwand der Wasserzufuhrleitung angeordnet. So wird das zweite Stellglied, insbesondere das Verschlusselement/-ventil mittels Wasserdruck beim Einströmen in vorteilhafter Weise verstellbar, insb. verschließt dies die Lufteinströmöffnung, ggf. mittels eines Dichtelementes oder dergleichen.

Beispielsweise ist ein erster Querschnitt der ersten Öffnung größer als ein zweiter Querschnitt der zweiten Öffnung. Hiermit wird ohne großen Aufwand erreicht, dass möglichst wenig oder kein/kaum Wasser im Normalbetreib bzw. bei geöffnetem ersten Stellglied durch die Lufteinströmöffnung entweichen kann und zu Wasserverlusten bzw. Schälwasser führt.

Die erfindungsgemäße Vorrichtung zeichnet sich dadurch aus, dass außen an der Lufteinströmöffnung ein Kanal und/oder Führungselement vorgesehen ist. Dieser/dieses Kanal und/oder Führungselement ist als Luftkanal/-führungselement ausgebildet. So kann einströmende Luft geleitet bzw. geführt werden. Vorteilhafterweise ist außen an der Wasserzufuhrleitung ein Kanal und/oder Führungselement vorgesehen. Dieser/dieses Kanal und/oder Führungselement kann als Wasserkanal/- führungselement ausgebildet werden. So kann austretendes Wasser geleitet bzw. geführt werden. Das austretende Wasser kann z.B. in vorteilhafter Weise zum anderen Schälwasser hingeführt bzw. zu einem Schälwasserspeicher oder dergleichen geleitet/geführt werden.

In Haushaltsmaschinen, wie z.B. Geschirrspülmaschinen, sind bereits Wasserenthärtungen im Einsatz. Diese weisen im Allgemeinen mindestens einen Tauscherbehälter, der bevorzugt eine körnige Ionentauschermasse enthält, einen Salzbehälter und einen oberhalb des Salzbehälters angeordneten Vorratsbehälter, der zum Regenerieren eine Wassermenge in den Salzbehälter abgibt, wobei Sole aus dem Salzbehälter in den Tauscherbehälter übertritt, auf.

Der offene Vorratsbehälter hat z.B. einen Überlauf und wird vom Schälwasser einer freien Luftstrecke ständig auf gleichem Niveau gefüllt gehalten. Die Wasserverlagerung vollzieht sich, gesteuert durch ein Magnetventil oder dergleichen durch hydrostatischen Druckausgleich.

Derartige Komponenten, insb. die Wasservorratsbehälter, die Luftstrecke etc. werden heutzutage im Allgemeinen bereits in sog. Einlauftaschen untergebracht (vgl. z.B. DE 42 16 292), die gewöhnlich seitlich innerhalb des Maschinengehäuses Platz sparend angeordnet sind.

Derzeit handelsüblich sind so genannte Einlauftaschen, die in einer Baueinheit sowohl die Regenerierdosiereinheit als auch den Enthärter und den Salzbehälter umfassen. Diese Baueinheit wird im Allgemeinen in eine Seitenwand der Haushaltsmaschine integriert. Nachteilig hierbei ist jedoch, dass zur Gewährleistung der Betriebssicherheit der in der Einlauftasche integrierten Komponenten ein vergleichsweise hoher Prüfaufwand notwendig ist. Darüber hinaus wird aus Platzgründen häufig ein relativ kleiner Salzbehälter verwendet. Zudem muss die Einlauftasche an die unterschiedlichsten Haushaltsmaschinentypen angepasst werden. Derartige Einlauftaschen sind beispielsweise aus der DE 102 12 250 B4 bekannt.

Vorzugsweise umfasst eine Einlauftasche und/oder eine Baueinheit mit Enthärterkomponenten wenigstens die Wasserzufuhrleitung und/oder wenigstens teilweise die Wasserzufuhreinheit und/oder das erste Stellglied, insbesondere das Wassereinlaufventil, und/oder wenigstens teilweise die Betriebswassereinheit und/oder die Entkopplungseinheit, insbesondere die Luftstrecke, und/oder die als Wasserauslauföffnung ausgebildete erste Öffnung und/oder die als Lufteinströmöffnung zweite Öffnung und/oder das zweite Stellglied.

### Ausführungsbeispiel

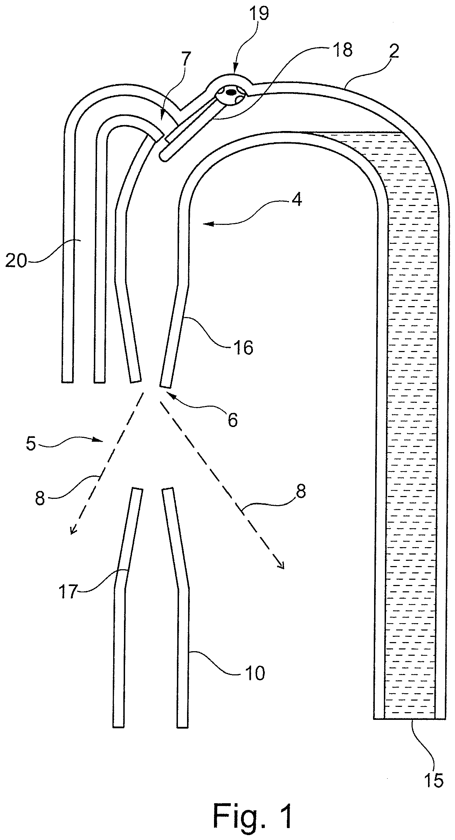

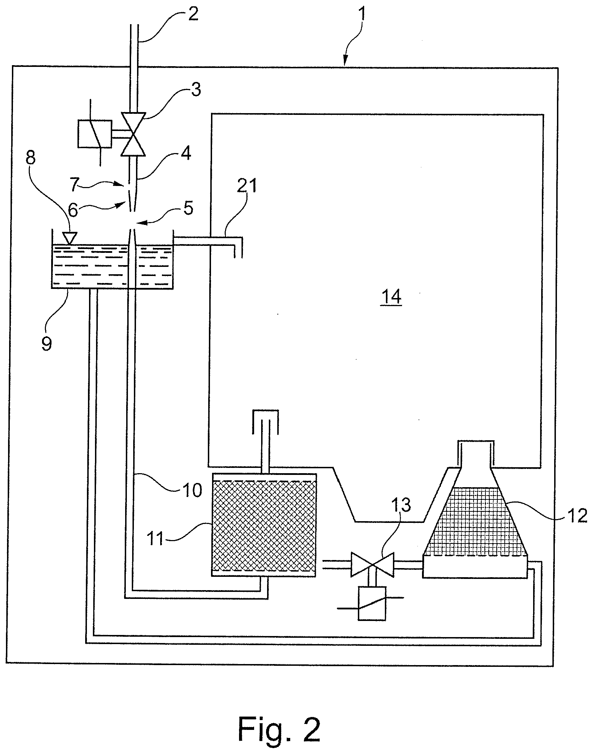

Ein Ausführungsbeispiel der Erfindung ist in der Zeichnung dargestellt und wird anhand der Figuren näher erläutert.

### Bezugszeichenliste

- 1: Geschirrspülmaschine
- 2: Wasserleitung/Zufuhr
- 3: Ventil
- 4: Ende
- 5: Luftstrecke
- 6: Öffnung
- 7: Luftöffnung
- 8: Schälwasser
- 9: Speicher/Tank
- 10: Wasserleitung/Intern
- 11: Ionentauscher
- 12: Solebehälter
- 13: Ventil
- 14: Geschirrraum
- 15: Wasser/Rest
- 16: Düse
- 17: Diffusor
- 18: Klappe
- 19: Schwenkachse
- 20: Luftkanal
- 21: Überlauf

## Patentansprüche

1. Haushaltsmaschine, insbesondere Geschirrspülmaschine (1), Waschmaschine oder dergleichen, mit einer eine Wasserzufuhrleitung (2) umfassenden Wasserzufuhreinheit zum Zuführen von Wasser, insbesondere zum Zuführen von Trinkwasser aus dem Trinkwassernetz, wobei die Wasserzufuhreinheit wenigstens ein erstes Stellglied (3), insbesondere ein Wassereinlaufventil (3), zum Öffnen und/oder Verschließen der Wasserleitung (2) aufweist, wobei eine Betriebswassereinheit (8, 9, 10, 11, 12, 14) für Betriebswasser der Haushaltsmaschine vorgesehen ist, wobei zwischen der Betriebswassereinheit und der Wasserzufuhreinheit wenigstens eine Entkopplungseinheit (5), insbesondere eine Luftstrecke (5), zur Entkopplung des Betriebswassers der Haushaltsmaschine von der Wasserzufuhrleitung (2), insbesondere vom Trinkwassernetz, vorgesehen ist, so dass die Wasserzufuhrleitung (2) wenigstens eine als Wasserauslauföffnung (6) ausgebildete erste Öffnung (6) umfasst, wobei wenigstens die Wasserzufuhrleitung (2) zumindest eine zweite Öffnung (7) umfasst, wobei die zweite Öffnung (7) als Lufteinströmöffnung (7) zum Einströmen von Luft in die Wasserzufuhrleitung (2) ausgebildet ist, **dadurch gekennzeichnet, dass** außen an der Lufteinströmöffnung (7) ein Kanal (20) und/oder Führungselement (20) vorgesehen ist, um einströmende Luft zu leiten bzw. zu führen.

2. Haushaltsmaschine nach Anspruch 1, **dadurch gekennzeichnet, dass** ein Abstand zwischen der ersten Öffnung (6) und der zweiten Öffnung (7) der Wasserzufuhrleitung (2) vorgesehen ist und/oder dass die als Lufteinströmöffnung (7) ausgebildete, zweite Öffnung (7) zwischen der als Wasserauslauföffnung (6) ausgebildeten, ersten Öffnung (6) und dem ersten Stellglied (3) angeordnet ist.

3. Haushaltsmaschine nach einem der vorgenannten Ansprüche, **dadurch gekennzeichnet, dass** die Wasserzufuhrleitung (2) wenigstens einen die Wasserauslauföffnung (6) umfassenden, sich verjüngenden Düsenabschnitt (16) aufweist.

4. Haushaltsmaschine nach einem der vorgenannten Ansprüche, **dadurch gekennzeichnet, dass** die Wasserzufuhrleitung (2) zwischen dem ersten Stellglied (3) und der als Wasserauslauföffnung (6) ausgebildeten, ersten Öffnung (6) wenigstens einen zumindest teilweise in vertikaler Richtung ausgerichteten Leitungsabschnitt (4) aufweist.

5. Haushaltsmaschine nach Anspruch 4, **dadurch gekennzeichnet, dass** der Leitungsabschnitt (4) wenigstens den Düsenabschnitt (16) und/oder die als Lufteinströmöffnung (7) ausgebildete, zweite Öffnung (7) umfasst.

6. Haushaltsmaschine nach einem der vorgenannten Ansprüche, **dadurch gekennzeichnet, dass** wenigstens ein zweites Stellglied (18), insbesondere ein Verschlusselement/-ventil (18), zum Verschließen und/oder Öffnen der als Lufteinströmöffnung (7) ausgebildeten, zweiten Öffnung (7) vorgesehen ist.

7. Haushaltsmaschine nach Anspruch 6, **dadurch gekennzeichnet, dass** das zweite Stellglied (18), insbesondere das Verschlusselement/-ventil (18), als eine um eine Schwenkachse (19) schwenkbare Klappe (18) ausgebildet ist.

8. Haushaltsmaschine nach Anspruch 7, **dadurch gekennzeichnet, dass** die Schwenkachse (19) der Klappe (18) an einem ersten Endbereich der Klappe (18) angeordnet ist und/oder die Schwenkachse (19) in vertikaler Richtung betrachtet oben an der Klappe (18) angeordnet ist und/oder die Schwenkachse (19) zwischen dem ersten Stellglied (3) und der zweiten Öffnung (7) angeordnet ist.

9. Haushaltsmaschine nach einem der Ansprüche 7 oder 8 **dadurch gekennzeichnet, dass** das zweite Stellglied (18), insbesondere das Verschlusselement/-ventil (18), und/oder die um die Schwenkachse (19) schwenkbare Klappe (18) zumindest teilweise an einer Innenwand der Wasserzufuhrleitung (2) angeordnet ist.

10. Haushaltsmaschine nach einem der vorgenannten Ansprüche, **dadurch gekennzeichnet, dass** ein erster Querschnitt der ersten Öffnung (6) größer als ein zweiter Querschnitt der zweiten Öffnung (7) ist.

## Claims

1. A household appliance, in particular a dishwasher (1), washing machine or the like, having a water supply unit comprising a water supply pipe (2) for supplying water, in particular for supplying drinking water from the drinking water network, wherein the water supply unit has at least one first actuator (3), in particular a water inlet valve (3), for opening and/or closing the water pipe (2), wherein a service water unit (8, 9, 10, 11, 12, 14) is provided for service water of the household appliance, wherein at least one decoupling unit (5), in particular an air gap (5), is provided between the service water unit and the water supply unit for decoupling the service water of the household appliance from the water supply pipe (2), in particular from the drinking water network, so that the water supply pipe (2) comprises at least one first opening (6) designed as a water outlet opening (6), wherein at least the water supply pipe (2) comprises at least one second opening (7), wherein the second opening (7) is designed as an air inflow opening (7) for the inflow of air into the water supply pipe (2), **characterised in that** a channel (20) and/or guide element (20) is provided on the outside of the air inflow opening (7) in order to conduct or guide inflowing air.

2. The household appliance according to claim 1, **characterised in that** a distance is provided between the first opening (6) and the second opening (7) of the water supply pipe (2) and/or **in that** the second opening (7) designed as an air inflow opening (7) is arranged between the first opening (6) designed as a water outlet opening (6) and the first actuator (3).

3. The household appliance according to any one of the preceding claims, **characterised in that** the water supply pipe (2) has at least one tapering nozzle portion (16) comprising the water outlet opening (6).

4. The household appliance according to any one of the preceding claims, **characterised in that** the water supply pipe (2) between the first actuator (3) and the first opening (6) designed as a water outlet opening (6) has at least one pipe portion (4) oriented at least partly in the vertical direction.

5. The household appliance according to claim 4, **characterised in that** the pipe portion (4) comprises at least the nozzle portion (16) and/or the second opening (7) designed as an air inflow opening (7).

6. The household appliance according to any one of the preceding claims, **characterised in that** at least one second actuator (18), in particular a closing element/valve (18), is provided for closing and/or opening the second opening (7) designed as an air inflow opening (7).

7. The household appliance according to claim 6, **characterised in that** the second actuator (18), in particular the closure element/valve (18), is designed as a flap (18) which can be pivoted about a pivot axis (19).

8. The household appliance according to claim 7, **characterised in that** the pivot axis (19) of the flap (18) is arranged at a first end region of the flap (18) and/or the pivot axis (19), when viewed in the vertical direction, is arranged at the top of the flap (18) and/or the pivot axis (19) is arranged between the first actuator (3) and the second opening (7).

9. The household appliance according to any one of claims 7 or 8, **characterised in that** the second actuator (18), in particular the closure element/valve (18), and/or the flap (18) pivotable about the pivot axis (19), is arranged at least partly on an inner wall of the water supply pipe (2).

10. The household appliance according to any one of the preceding claims, **characterised in that** a first cross section of the first opening (6) is larger than a second cross section of the second opening (7).

## Revendications

1. Appareil électroménager, en particulier lave-vaisselle (1), lave-linge ou similaire, comprenant une unité d'alimentation en eau comportant une conduite d'alimentation en eau (2) destinée à l'alimentation en eau, en particulier à l'alimentation en eau potable du réseau d'eau potable, dans lequel l'unité d'alimentation en eau comporte au moins un premier élément de réglage (3), en particulier une vanne d'arrivée d'eau (3), pour ouvrir et/ou fermer la conduite d'eau (2), dans lequel une unité d'eau de service (8, 9, 10, 11, 12, 14) est située pour l'eau de service de l'appareil électroménager, dans lequel, entre l'unité d'eau de service et l'unité d'alimentation en eau, au moins une unité de découplage (5), en particulier un intervalle d'air (5), est situé pour découpler l'eau de service de l'appareil électroménager de la conduite d'alimentation en eau (2), en particulier du réseau d'eau potable, de telle sorte que la conduite d'alimentation en eau (2) comporte au moins une première ouverture (6) conçue sous la forme d'une ouverture de sortie d'eau (6), dans lequel au moins la conduite d'alimentation en eau (2) comprend au moins une seconde ouverture (7), dans lequel la seconde ouverture (7) est conçue sous la forme d'une ouverture d'entrée d'air (7) destinée à l'entrée d'air dans la conduite d'alimentation en eau (2), **caractérisé en ce qu'**à l'extérieur de l'ouverture d'entrée d'air (7), un canal (20) et/ou un élément de guidage (20) est situé pour diriger ou guider l'air entrant.

2. Appareil électroménager selon la revendication 1, **caractérisé en ce qu'**une distance est située entre la première ouverture (6) et la seconde ouverture (7) de la conduite d'alimentation en eau (2) et/ou que la seconde ouverture (7) conçue sous la forme d'une ouverture d'entrée d'air (7) est disposée entre la première ouverture (6), conçue sous la forme d'une ouverture de sortie d'eau (6), et le premier élément de réglage (3).

3. Appareil électroménager selon l'une quelconque des revendications précédentes, **caractérisé en ce que** la conduite d'alimentation en eau (2) comporte au moins une section de buse (16) effilée, comprenant l'ouverture de sortie d'eau (6).

4. Appareil électroménager selon l'une quelconque des revendications précédentes, **caractérisé en ce que** la conduite d'alimentation en eau (2), entre le premier élément de réglage (3) et la première ouverture (6), conçue sous la forme d'ouverture de sortie d'eau (6), comporte au moins une section de conduite (4) orienté au moins partiellement dans le sens vertical.

5. Appareil électroménager selon la revendication 4, **caractérisé en ce que** la section de conduite (4) comporte au moins la section de buse (16) et/ou la seconde ouverture (7), conçue sous la forme d'une ouverture d'entrée d'air (7).

6. Appareil électroménager selon l'une quelconque des revendications précédentes, **caractérisé en ce qu'**au moins un second élément de réglage (18), en particulier un élément de fermeture / une soupape d'arrêt (18), est situé pour fermer et/ou ouvrir la seconde ouverture (7), conçue sous la forme d'une ouverture d'entrée d'air (7).

7. Appareil électroménager selon la revendication 6, **caractérisé en ce que** le second élément de réglage (18), en particulier l'élément de fermeture / la soupape d'arrêt (18), est conçu sous la forme d'un volet (18) pouvant pivoter autour d'un axe de pivotement (19).

8. Appareil électroménager selon la revendication 7, **caractérisé en ce que** l'axe de pivotement (19) du volet (18) est disposé sur une première zone d'extrémité du volet (18) et/ou l'axe de pivotement (19), vu dans le sens vertical, est disposé sur le dessus du volet (18) et/ou l'axe de pivotement (19) est disposé entre le premier élément de réglage (3) et la seconde ouverture (7).

9. Appareil électroménager selon l'une des revendications 7 ou 8, **caractérisé en ce que** le second élément de réglage (18), en particulier l'élément de fermeture / la soupape d'arrêt (18), et/ou le volet (18) pouvant pivoter autour de l'axe de pivotement (19), est disposé au moins partiellement sur une paroi intérieure de la conduite d'alimentation en eau (2).

10. Appareil électroménager selon l'une quelconque des revendications précédentes, **caractérisé en ce qu'**une première section transversale de la première ouverture (6) est supérieure à une seconde section transversale de la seconde ouverture (7).
